# EUROPÄISCHE PATENTSCHRIFT

(11) **EP 2 542 455 B1**
(45) Veröffentlichungstag und Bekanntmachung des Hinweises auf die Patenterteilung: **09.01.2019**
(21) Anmeldenummer: 11706264.6
(22) Anmeldetag: 03.03.2011
(51) Int. Cl.: B60T 8/172, B60T 8/88, B60T 7/12

(54) **BETRIEBSVERFAHREN FÜR EIN KRAFTFAHRZEUG INSBESONDERE UMFASSEND EIN ELEKTRONISCH GESTEUERTES UND/ODER GEREGELTES PARKBREMSSYSTEM**
OPERATING METHOD FOR A MOTOR VEHICLE COMPRISING IN PARTICULAR AN ELECTRONICALLY CONTROLLED PARKING BRAKE SYSTEM
PROCÉDÉ DE FONCTIONNEMENT POUR UN VÉHICULE AUTOMOBILE, COMPRENANT EN PARTICULIER UN SYSTÈME DE FREIN DE STATIONNEMENT COMMANDÉ ET/OU RÉGULÉ ÉLECTRONIQUEMENT

(30) Priorität: 05.03.2010 DE 102010002626
(43) Veröffentlichungstag der Anmeldung: 09.01.2013
(73) Patentinhaber: Continental Teves AG & Co. OHG, 60488 Frankfurt am Main (DE)
(72) Erfinder: ATTALLAH, Faouzi, 64283 Darmstadt (DE); MARON, Christof, 65779 Kelkheim (DE); SCHNEIDER, Heinz-Anton, 65527 Niedernhausen (DE); STAMATOSKI, Oliver, 60431 Frankfurt/M (DE)
(86) Internationale Anmeldenummer: PCT/EP2011/053209
(87) Internationale Veröffentlichungsnummer: WO 2011/107551

(56) Entgegenhaltungen:
- EP-A1- 1 327 566
- DE-A1- 10 253 211
- DE-A1-102005 052 160
- FR-A1- 2 828 450
- FR-A1- 2 934 549

## Beschreibung

Die Erfindung betrifft ein Betriebsverfahren für ein Kraftfahrzeug nach den Merkmalen vom Oberbegriff vom Anspruch 1. Die Erfindung umfasst insbesondere eine Kraftfahrzeugbremsanlage mit elektromechanischen Aktuatoren mit automatisierter Bremsenlösefunktion, wobei eine, mit den Aktuatoren verbundene Elektronikeinheit unter Verarbeitung von wenigstens einem, einen Fahrerwunsch repräsentierenden Signal unter Verwendung von wenigstens einem Sensor und/oder Schalter, wie insbesondere Neigungswinkelsensor, Raddrehsensor, Kupplungssensor oder ähnlichem, der vorzugsweise mit der elektronischen Steuereinheit direkt oder per Netzwerkverbindung (z.B. CAN) verbunden ist, und unter Verwendung von gespeicherten Parametern, Daten und/oder Programmen, die auf elektronischem Wege automatisiert einen Anfahrwunsch ermitteln, und anschließend wenigstens ein elektronischer Befehl zum Bremsenlösen an die Aktuatoren abgegeben wird, wobei die Elektronikeinheit mit weiteren Elektronikeinheiten, Sensoren und/oder Daten-Bus-Systemen vernetzt vorgesehen ist, und mit diesen Signale und/oder Daten austauscht, sowie mit selbstlernenden Eigenschaften nach Fahrzeugherstellung.

Ein grundsätzliches Betriebsverfahren für eine Feststellbremsanlage mit einer Elektronikeinheit umfassend eine automatisierte Bremsenlösefunktion in Abhängigkeit mehrerer Sensorsignale wie insbesondere einem Neigungswinkelsensor ist aus der US 4,629,043 A1 bekannt.

Aus dem Vortrag "Netzwerkintegration von Fahrzeugkomponenten am Beispiel einer Elektrischen Feststellbremse ...", Ralf Leiter, Fahrwerkstech, 11./12.3.2003, ist ein gattungsgemäßes Betriebsverfahren mit automatisierter Bremsenlösefunktion bekannt. Demnach ist vorgesehen, dass eine gesonderte Feststellbrems-Elektronikeinheit über eine End of Line Konfigurierung bei dem Fahrzeughersteller unter Verwendung von einem bestimmten Protokoll unter Nutzung einer Diagnoseverbindung via CAN initialisiert wird, und wobei die Feststellbrems-Elektronikeinheit im Betrieb hauptsächlich mit einer ESP-Elektronikeinheit kommuniziert, die das Bremsenmanagement für eine hydraulisch betätigbare sowie fremdansteuerbare Betriebsbremsanlage übernimmt.

Aus der EP 1 327 566 A1 erhellt eine besonders günstige wie auch lernfähige Kraftfahrzeuganfahrhilfesteuerungsvorrichtung für Motorfahrzeuge mit Handschaltgetriebe und umfassend eine Erfassungseinrichtung für Signale, eine Auswerteeinheit sowie eine Steuereinheit zur Ansteuerung einer Stelleinrichtung, und wobei sich die Anfahrhilfesteuerungsvorrichtung unter Auswertung von einem erfassten Anfahrrucksignal so verhält, dass eine hydraulische oder elektromechanische Feststellbremse individuell angepasst gelöst werden kann.

Bekannte Verfahren zur Inbetriebnahme der Kraftfahrzeuge sind verbesserungsfähig. Unter Berücksichtigung einer Vielzahl von elektronischen Steuergeräten in einem modernen Kraftfahrzeug ist eine umfangreiche end-of-line-Programmierung nicht unproblematisch und steigert den Aufwand beim Fahrzeughersteller beträchtlich, weil es die Fertigungstiefe erhöht. Kenndaten, Parameter und Software werden bei Fahrzeugherstellung fest in einen Speicher geschrieben.

Es ist daher eine Aufgabe der vorliegenden Erfindung, die Nachteile von dem Stand der Technik zu verbessern.

Zur Lösung des Problems sieht die Erfindung vor, dass die Routine zur Softwareversorgung, Konfigurierung und/oder Kalibrierung der elektrohydraulischen Kraftfahrzeugbremsanlage mehrstufig ausgebildet ist, dass Parameter und/oder Kenndaten der Kraftfahrzeugbremsanlage entsprechend einer Gewichtung in unterschiedliche Kategorien eingeteilt sind, und dass entsprechend der Gewichtung ausgewählte Parameter und/oder Kenndaten der Kraftfahrzeugbremsanlage der automatisierten Konfigurierungsroutine zugänglich sind, wobei auf Grundlage von der Gewichtung bestimmte, sicherheitskritische, Parameter und / oder Kenndaten der Kraftfahrzeugbremsanlage einer gesonderten Konfigurierungsroutine zugänglich sind.

Einzelheiten der Erfindung gehen aus der Beschreibung anhand der Zeichnung hervor. In der Zeichnung zeigt:

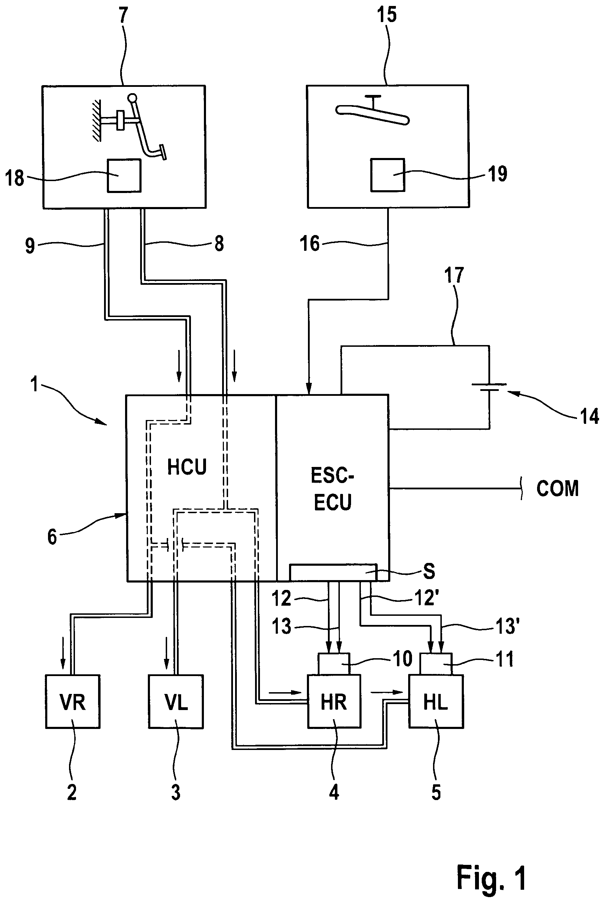

Fig. 1 einen Schaltplan von einem Kraftfahrzeug-Bremssystem.

Aus der Fig. 1 geht eine mehrkreisige, elektrohydraulisch betätigbare Kraftfahrzeugbremsanlage 1 hervor. Diese umfasst mehrere Bremssättel 2-5 mit hydraulisch betätigbaren Aktuatoren, die in mehreren hydraulischen Bremskreisen organisiert sind, und mit einem elektronisch gesteuerten Aggregat 6 umfassend eine Elektronikeinheit (EPB+ESC-EPB-ESC-ECU) und eine Hydraulikeinheit (HCU) enthaltend ein Motor-PumpenAggregat sowie elektrohydraulische Ventile zur hydraulischen Energieversorgung, hydraulisch verbunden sind. Dabei sind die hydraulisch betätigbaren Aktuatoren durch ein hydraulisches Betätigungsmittel 7 über durchgehende Hydraulikleitungen 8,9 fahrerinitiiert betätigbar, und das Aggregat 6 stellt in diesem Zusammenhang grundsätzlich eine elektronisch geregelte Bremsmomentenverteilung (EBD) für die Bremssättel 2-5 zur Verfügung. Eine weitere Funktion besteht darin, dass die Bremssättel 2-5 fahrerunabhängig durch das Aggregat 6, insbesondere durch ein elektronisches Stabilitätsprogramm (ESC), betätigbar sind. Um weitere elektronische Assistenzfunktion zu ermöglichen, weisen wenigstens einige der Bremssättel 2-5, insbesondere zum Betätigen oder Lösen einer Feststellbremswirkung auf Grundlage von einem Parkbremswunsch, zusätzlich oder gesondert elektromechanische Aktuatoren 10, 11 mit hohem Wirkungsgrad auf. Die elektromechanischen Aktuatoren 10, 11 können im Zusammenhang mit einer Scheibenbremse vorgesehen sein, oder auf eine Trommelbremse einwirken, die jeweils bevorzugt an einer Hinterachse angeordnet sind. Auch bei anderweitigen Reib- oder Rastmechanismen, die zum Festsetzen von Fahrzeugrädern dienen, kann die Erfindung angewendet werden. Zur elektrischen Versorgung ist wenigstens eine elektrische Stromquelle 14 elektrisch mit der Elektronikeinheit EPB-ESC-ECU verbunden. Dieselbe Verbindung dient der grundsätzlichen elektrischen Versorgung vom Aggregat 6 sowie der daran angeschlossenen Verbraucher. Die Elektronikeinheit EPB+ESC-EPB-ESC-ECU ist über jeweils wenigstens zwei gesonderte elektrische Versorgungsleitungen 12, 13 mit den elektromechanischen Aktuatoren 10, 11 verbunden. Weiterhin verfügt die Elektronikeinheit EPB+ESC-EPB-ESC-ECU über wenigstens ein elektrisches Schaltmittel, um die elektromechanisch betätigbaren Aktuatoren 10, 11 elektrisch reversierbar zu versorgen. Es versteht sich, dass bei Verwendung von dreiphasigen Drehstromantrieben im Bereich der Aktuatoren 10, 11 drei Versorgungsleitungen vorgesehen sein können.

Das genannte Schaltmittel kann zusätzlich integrierte Mittel zum Reversieren von wenigstens einem der elektromechanischen Aktuatoren 10, 11 aufweisen, um eine betätigte Feststellbremsfunktion zu lösen. Die konkrete Ausgestaltung derartiger Reversiermittel kann unterschiedlich gestaltet sein. Bei Verwendung von einem Gleichstrom-Getriebemotor im Bereich der Aktuatoren 10, 11 können relaisartig wirkende Halbleiterschalter zum einfachen Umpolen der Stromrichtung in den beiden Versorgungsleitungen 12, 13 ausreichen. Insbesondere bei Verwendung von mehrphasigen, insbesondere bürstenlosen Gleichstrommotoren ist dagegen eine Integration von Schaltmitteln zu bevorzugen, die Halbleiterschaltmittel in einer sogenannten MOS-FET-H-Brückenschaltungsanordnung enthält, um den Mehrquadrantenbetrieb zu ermöglichen.

Zur Verbindung der Elektronikeinheit EPB+ESC-EPB-ESC-ECU mit deren Peripherie wie insbesondere den Aktuatoren 10, 12 dient wenigstens eine zusätzliche elektrische Schnittstelle S, beispielsweise mit wenigstens einem zusätzlichen elektrischen Steckelement, zur elektrischen Verbindung mit den wenigstens zwei elektrischen Versorgungsleitungen 12,13;12',13'. Es ist ein Busanschluss COM zur Integration und Kommunikation der ESC+EPB-EPB-ESC-ECU innerhalb einer Fahrzeugnetzwerktopologie vorgesehen. Weiterer Anschlüsse oder Verbindungen von Betätigungssensoren 18,19, Raddrehsensoren, Drucksensoren oder ähnliches mehr sind nicht verdeutlich.

Weiterhin ist eine Mensch-Maschine-Schnittstelle 15 in Gestalt von einem Schalter oder Taster und ein nicht explizit gezeichnetes EPB-ESC-ECU-seitig integriertes Schaltmittel in Relation zu den Aktuatoren 10, 11 in Serie geschaltet. Zur elektrischen Anbindung dient eine elektrische Verbindungsleitung 16 zwischen Mensch-Maschine-Schnittstelle 15 und EPB-ESC-ECU.

Obwohl es aus der schematischen Fig.1 nicht detailliert in dieser Form hervorgeht, ist es bei einer vorteilhaften Gestaltung zur Minimierung von Leitungslängen und daraus resultierender elektrischer Leitungswiderstände vorteilhaft, wenn die Elektronikeinheit EPB+ESC-EPB-ESC-ECU und die Stromquelle 14 in einem gemeinsamen Einbauraum, wie insbesondere in einem Motorraum oder Kofferraum eines Kraftfahrzeugs, verhältnismäßig nahe beieinander angeordnet sind, so dass die Verbindung 17 verhältnismäßig kurz gehalten werden kann. Insgesamt betrachtet kann als grundsätzliche Richtlinie für die Bemessung sämtlicher elektrischer Leitungslängen des Systems dienen, dass ein Quotient aus der Länge einer längsten Versorgungsleitung 12, 13 einerseits, und der Länge einer elektrischen Verbindung 17 zwischen elektrischer Stromquelle 14 und Elektronikeinheit EPB+ESC-EPB-ESC-ECU andererseits mindestens etwa 2 oder mehr beträgt. Besonders bevorzugt wird ein Quotient zwischen etwa 3 bis 10 angestrebt, wobei auch zur prinzipiellen Minderung elektrischer Widerstände prinzipiell eine geringe Einzeldrahtlänge angestrebt wird. Die Begriffe Leitungslänge oder Drahtlänge sind generell so definiert, dass darunter prinzipiell stromführende Bauteile wie insbesondere sogenannte Stromschienen oder auch sonstige feste Fahrzeug- oder Chassisbauteile mit einer Stromführungsfunktion für die Aktuatoren 10, 11 zu verstehen sind.

Nachstehend wird ein elektronisches Betriebsverfahren näher erläutert. Erfindungsgemäß erfolgt grundsätzlich, beispielsweise periodisch, bei Eintritt einer bestimmten Bedingung oder auf Anforderung, eine automatisiert-selbstlernende Konfigurierung der Elektronikeinheit EPB-ESC-ECU. Die Konfigurationsroutine erfolgt bevorzugt im Betrieb des Kraftfahrzeugs. Die Konfigurationsroutine der Elektronikeinheit EPB-ESC-ECU muss nicht zwingend sämtliche wichtigen, in der EPB-ESC-ECU abgespeicherten Parameter oder Kenndaten zur Abarbeitung einer elektronischen Regelung beinhalten, sondern kann selektiv ausgesuchte Parameter betreffen, die beispielsweise ausschließlich komfortrelevant sind. Die Konfigurationsroutine kann sich also nur auf ausgewählte Parameter beziehen. Weiterhin kann eine Basisfunktionalität der Kraftfahrzeugbremsanlage 1 stets gewährleistet und abgesichert sein, indem bestimmte Daten oder Datensätze in einem Festwertspeicher dauerhaft vorgehalten sind, welche als Rückfalloption beispielsweise nach fehlerhaft ausgeführter Konfigurationroutine an Stelle der ermittelten Kenndaten oder Parametern zur Regelung genutzt werden.

In vorteilhafter Ausgestaltung der Erfindung betreffen die Kenndaten und/oder Parameter, die innerhalb der Konfigurationsroutine eingelesen werden, insbesondere einen statischen Reibungskoeffizienten µ. Der statische Reibungskoeffizient eines Fahrzeugs betrifft einen Grenz-Zustand, wenn ein Fahrzeug bei absolut ebener Strecke, nur mit dem Fahrzeugführer an Bord, ausschließlich durch Kupplungsbetätigung, bei Leerlaufdrehzahl vom Stand in einen Bewegungszustand überführt wird. Dies steht in Relation mit einem ersten Kupplungseingriffspunkt (CEP - Clutch Engaging Point). Der Reibungskoeffizient beinhaltet innere Reibungsvorgänge im Kraftfahrzeug, wie beispielsweise Lagerreibung in Motor, Getriebe, Radnaben etc. Der Reibungskoeffizient µ kann weiterhin Rollreibung wie insbesondere einen Rollreibungskoeffizienten zwischen Reifen und Fahrbahn betreffen, oder die Summe sämtlicher Reibungskoeffizienten.

In vorteilhafter Ausgestaltung der Erfindung wird ein aktueller Rollreibungskoeffizient in Abhängigkeit von den Reibungsverhältnissen innerhalb des Fahrzeugantriebstranges eingelernt, so dass beispielsweise eine automatisierte Feststellbrems-Lösefunktion diesbezüglich eine verbesserte und insbesondere komfortablere Funktionalität erhält.

Bei einer besonders vorteilhaften Ausgestaltung der Erfindung erstrecken sich die selbsteinlernenden Eigenschaften insbesondere auf eine aktuelle Fahrzeuggesamtmasse. Die Fahrzeuggesamtmasse kann durch geeignete Sensoren im Fahrwerkbereich gemessen oder abgeschätzt werden.

In weiterer Ausgestaltung der Erfindung ist es vorteilhaft, wenn die selbstlernenden Eigenschaften der Elektronikeinheit EPB-ESC-ECU nach Bedarf, beschränkt, befristet, turnusmäßigperiodisch, automatisch und/oder manuell in Abhängigkeit von einer besonderen Freischaltung erfolgen kann, welche insbesondere durch eine autorisierte Fachwerkstatt durch elektronische Identifikation anhand von einer besonderen Elektronikeinheit, Software, Code oder ähnlichem mehr erfolgen kann, durchgeführt wird, wobei dies prinzipiell auch drahtlos erfolgen kann. Es versteht sich, dass beliebige Kombinationen der erwähnten Varianten denkbar sind, und zur weiteren detaillierten Gestaltung des Verfahrens beitragen können.

Besonders komfortable Anfahrvorgänge werden ermöglicht, wenn die Selbstkonfigurierung jeweils unmittelbar vor einem nachfolgenden Anfahrvorgang durchgeführt wird, so dass für die Komfortfunktion des automatisierten Bremsenlösens jeweils stets aktuelle Daten wie insbesondere Rollreibungsdaten/- koeffizienten und/oder Fahrzeugmassedaten vorgehalten und abgespeichert werden. Es versteht sich, dass die Daten vor Ausführung eines automatisierten Bremsenlösevorgangs verifiziert werden können, insbesondere wenn zwischenzeitlich das Fahrzeug für einen längeren Zeitraum nicht in Betrieb war, was darauf hindeuten kann, dass die gespeicherten Kenndaten zwischenzeitlich überholt sein können. Daher ist auch eine Systemzeitinformation in Verbindung mit der Ablage der Kennwerte/Daten zielführend.

Insgesamt ermöglicht die Erfindung einen verbesserten, komfortableren Betrieb von Zusatzfunktionalitäten einer Kraftfahrzeugbremsanlage 1, weil die Konfigurierung der Elektronikeinheit EPB-ESC-ECU nicht starr end-of-line, sondern flexibilisiert, mit selbsteinlernenden Eigenschaften, durchgeführt wird, und sich infolgedessen bis in den normalen Betrieb durch den Fahrzeugführer über die Fahrzeuglebensdauer erstrecken kann. Es versteht sich, dass die Selbstkonfigurierung im Wesentlichen vorrangig komfortorientierte Parameter, Kenndaten oder ähnliches mehr erfasst, und dass die sicherheitsrelevanten Parameter und Kenndaten besonders geschützt, nicht ohne weiteres überschreibbar, abgelegt sind.

Prinzipiell ist es auch denkbar, eine Überschreibung und/oder Löschung bereits vorhandener, abgespeicherter Daten, abzusichern, indem eine Freigabe erforderlich ist.

Ein Nebenprodukt der Erfindung kann beispielsweise darin bestehen, dass bei gelöstem elektromechanischem Aktuator 10, 11 und unter definierten physikalischen Fahrzeugbedingungen (Fahrzeuggeschwindigkeit, Antriebsdaten, Fahrstreckendaten) eine Analyse der aktuellen Reibungsverhältnisse derart durchgeführt wird, dass die ermittelten Reibungsverhältnisse oder -Werte mit abgespeicherten Sollreibungswerten für die definierte Fahrzeugbedingung verglichen werden, um beispielsweise einen fehlerhaft oder unvollständig gelösten Aktuator 10,11, einen Lagerdefekt, oder ähnliche Störung automatisiert zu identifizieren.

### Bezugszeichenliste

- 1: Kraftfahrzeugbremsanlage
- 2: Bremssattel
- 3: Bremssattel
- 4: Bremssattel
- 5: Bremssattel
- 6: Aggregat
- 7: hydraulische Betätigungsmittel
- 8: Hydraulikleitung
- 9: Hydraulikleitung
- 10: elektromechanischer Aktuator
- 11: elektromechanischer Aktuator
- 12: Versorgungsleitung
- 13: Versorgungsleitung
- 14: Stromquelle
- 15: Mensch-Maschine-Schnittstelle
- 16: Verbindungsleitung
- 17: Verbindung
- 18, 19: Sensor

- EPB-ESC-ECU: Elektronikeinheit
- HCU: Hydraulikeinheit
- S: Schnittstelle
- VR: Vorn Rechts
- VL: Vorn Links
- HR: Hinten Rechts
- HL: Hinten Links
- COM: Busanschluss
- ESC: Elektronisches Stabilitätsprogramm
- EPB: Elektrische Parkbremse
- µ: Reibungskoeffizient

## Patentansprüche

1. Betriebsverfahren für ein Kraftfahrzeug insbesondere umfassend elektromechanische Aktuatoren (10,11), insbesondere aufweisend eine automatisierte Bremsenlösefunktion wobei ein Anfahrwunsch elektronisch ermittelt wird, indem eine, mit den Aktuatoren (10,11) verbundene Elektronikeinheit (EPB-ESC-EPB-ESC-ECU) unter Verarbeitung von wenigstens einem Signal von wenigstens einem Sensor (18,19) und/oder Mensch-Maschine-Schnittstelle (15), wie insbesondere einem Neigungswinkelsensor, Raddrehsensor, Kupplungssensor oder ähnlichem, der vorzugsweise mit der Elektronikeinheit (EPB-ESC-EPB-ESC-ECU) direkt verbunden ist, und unter Verwendung von gespeicherten Parametern, Daten und/oder Software, auf elektronischem Wege automatisiert den Anfahrwunsch ermittelt, und anschließend wenigstens einen elektronischen Befehl zum Bremsenlösen an die elektromechanischen Aktuatoren (10,11) abgibt, und wobei die Elektronikeinheit (EPB-ESC-ECU) mit Kommunikationspartnern wie insbesondere Elektronikeinheiten, Sensoren und/oder Daten-Bus-Systemen vernetzt vorgesehen ist, um mit den Kommunikationspartnern Signale und/oder Daten auszutauschen, und umfassend eine elektronische Routine zur Softwareversorgung, Konfigurierung und/oder Kalibrierung der Kraftfahrzeugbremsanlage(1), und mit im Anschluss an eine Fahrzeugherstellung, selbstlernenden Eigenschaften im Sinne einer automatisierten Konfigurierungsroutine, **dadurch gekennzeichnet, dass** die Routine zur Softwareversorgung, Konfigurierung und/oder Kalibrierung der elektrohydraulischen Kraftfahrzeugbremsanlage (1) mehrstufig ausgebildet ist, und dass Parameter und/oder Kenndaten der Kraftfahrzeugbremsanlage (1) entsprechend einer Gewichtung in unterschiedliche Kategorien eingeteilt sind, und dass entsprechend der Gewichtung ausgewählte Parameter und/oder Kenndaten der Kraftfahrzeugbremsanlage (1) der automatisierten Konfigurierungsroutine zugänglich sind, wobei auf Grundlage von der Gewichtung bestimmte, sicherheitskritische, Parameter und / oder Kenndaten der Kraftfahrzeugbremsanlage (1) einer gesonderten Konfigurierungsroutine zugänglich sind.

2. Betriebsverfahren für ein Kraftfahrzeug nach Anspruch 1, **dadurch gekennzeichnet, dass** die automatisierte Konfigurierungsroutine für ein Parkbremssystem vorgesehen ist, und im Anschluss an eine end-of-line Routine im laufenden Kraftfahrzeugbetrieb vorgesehen ist.

3. Betriebsverfahren nach Anspruch 1, **dadurch gekennzeichnet, dass** die automatisierte Konfigurierungsroutine abgesichert ist.

4. Betriebsverfahren nach Anspruch 1, **dadurch gekennzeichnet, dass** die Kenndaten und/oder Parameter, die mit der automatisierten Konfigurierungsroutine eingelesen werden, insbesondere Informationen über einen Reibungskoeffizienten µ, wie insbesondere einen Rollreibungskoeffizienten betreffen.

5. Betriebsverfahren nach Anspruch 4, **dadurch gekennzeichnet, dass** die Kenndaten und / oder Parameter Informationen über einen statischen Reibungskoeffizienten in Abhängigkeit von aktuellen Reibungsverhältnissen innerhalb eines Fahrzeugantriebsstranges aufweisen.

6. Betriebsverfahren nach Anspruch 1, **dadurch gekennzeichnet, dass** die Kenndaten und / oder Parameter Informationen über eine aktuelle Fahrzeuggesamtmasse aufweisen.

7. Betriebsverfahren nach Anspruch 1, **dadurch gekennzeichnet, dass** die automatisierte Konfigurierungsroutine der Kraftfahrzeugbremsanlage (1) nach Bedarf, und/oder beschränkt, und/oder befristet, und/oder turnusmäßigperiodisch und/oder auf Vorgabe in Abhängigkeit von einer besonderen Freischaltung erfolgt.

8. Betriebsverfahren nach Anspruch 7, **dadurch gekennzeichnet, dass** die automatisierte Konfigurierungsroutine nach elektronischer Identifikation anhand von einer gesonderten Elektronikeinheit und/oder Software und/oder Code oder ähnlichem erfolgt.

9. Betriebsverfahren nach Anspruch 7, **dadurch gekennzeichnet, dass** die automatisierte Konfigurierungsroutine jeweils unmittelbar vor einem nachfolgenden Anfahrvorgang durchgeführt wird.

10. Betriebsverfahren nach einem oder mehreren der vorhergehenden Ansprüche, **dadurch gekennzeichnet, dass** die durch die automatisierte Konfigurierungsroutine gewonnenen Daten insbesondere durch Kommunikation der Steuereinheit (EPB-ESC-ECU) mit anderen Kommunikationsteilnehmern, verifiziert werden.

11. Betriebsverfahren nach einem oder mehreren der vorhergehenden Ansprüche, **dadurch gekennzeichnet, dass** abgespeicherte Daten (Altdaten) einer bereits erfolgten Konfigurierung durch die Daten (Neudaten) einer automatischen Konfigurierungsroutine nur nach positiver Bestätigung und oder Freigabe ersetzt werden.

## Claims

1. Operating method for a motor vehicle in particular comprising electro-mechanical actuators (10, 11) in particular comprising an automated brake release function, wherein a start-up request is determined electronically, in that an electronic unit (EPB-ESC-EPB-ESC-ECU) that is connected to the actuators (10, 11) whilst processing at least one signal from at least one sensor (18, 19) and/or man-machine interface (15), for example in particular, an angle of inclination sensor, a wheel rotation sensor, a coupling sensor or the like, that is preferably directly connected to the electronic unit (EPB-ESC-EPB-ESC-ECU), and whilst using stored parameters, data and/or software the start-up request is determined electronically in an automated manner, and subsequently at least one electronic command is transmitted to the electro-mechanical actuators (10, 11) in order to release the brake and wherein the electronic unit (EPB-ESC-ECU)is provided networked to communication partners, for example, in particular to the electronic units, sensors and/or data-bus systems, in order to exchange signals and/or data with the communication partners, and comprising an electronic routine for providing software, configuring and/or calibrating the motor vehicle brake system (1), and having subsequent to the vehicle being produced self-learning properties in terms of an automated configuration routine, **characterized in that** the routine for providing software, configuring and/or calibrating the electrohydraulic motor vehicle brake system (1) is embodied in a multi-level manner, and that parameters and/or characteristics of the motor vehicle brake system (1) are classified in different categories according to a weighting and that according to the weighting selected parameters and/or characteristics of the motor vehicle brake system (1) are accessible to the automated configuration routine, wherein safety-critical parameters and/or characteristics of the motor vehicle brake system (1) predetermined on the basis of the weighting are accessible to a separate configuration routine.

2. Operating method for a motor vehicle according to Claim 1, **characterized in that** the automated configuration routine is provided for a parking brake system, and is provided subsequent to an end-of-line routine during the running operation of the motor vehicle.

3. Operating method according to Claim 1, **characterized in that** the automated configuration routine is safeguarded.

4. Operating method according to Claim 1, **characterized in that** the characteristics and/or parameters that are read in using the automated configuration routine are in particular information regarding a coefficient of friction µ, for example, in particular a coefficient of rolling friction.

5. Operating method according to Claim 4, **characterized in that** the characteristics and/or parameters comprise information regarding a static coefficient of friction in response to the prevailing friction ratios within a vehicle drive train.

6. Operating method according to Claim 1, **characterized in that** the characteristics and/or parameters comprise information regarding a prevailing total vehicle mass.

7. Operating method according to Claim 1, **characterized in that** the automated configuration routine of the motor vehicle brake system (1) is performed as required, and/or restricted, and/or limited in time, and/or in periodic cycles, and/or on demand in response to a particular activation procedure.

8. Operating method according to Claim 7, **characterized in that** the automated configuration routine is performed by means of electronic identification using a separate electronic unit and/or software and/or code or the like.

9. Operating method according to Claim 7, **characterized in that** the automated configuration routine is performed in each case immediately prior to a subsequent start-up procedure.

10. Operating method according to any one or a plurality of the preceding claims, **characterized in that** the data that is obtained by means of the automated configuration routine, in particular by communication of the control unit (EPB-ESC-ECU) with other communication participants can be verified.

11. Operating method according to any one or a plurality of the preceding claims, **characterized in that** only following positive confirmation and/or an activation procedure are stored data (legacy data) of a configuration routine that has already been performed replaced by data (new data) of an automated configuration routine.

## Revendications

1. Procédé de fonctionnement d'un véhicule automobile comprenant en particulier des actionneurs électromécaniques (10, 11), ayant notamment une fonction de desserrage de freins automatique, une demande de démarrage étant déterminée électroniquement en ce qu'une unité électronique (EPB-ESC-EPB-ESC-ECU) reliée aux actionneurs (10, 11) détermine électroniquement et automatiquement la demande de démarrage par traitement d'au moins un signal provenant d'au moins un capteur (18, 19) et/ou d'une interface homme-machine (15), tels que notamment un capteur d'angle d'inclinaison, un capteur de rotation de roue, un capteur d'embrayage ou similaire, qui est relié de préférence directement à l'unité électronique (EPB-ESC-EPB-ESC-ECU), et à l'aide de paramètres, de données et/ou de logiciels en mémoire, puis délivre au moins une commande électronique de desserrage de frein aux actionneurs électromécaniques (10, 11), et l'unité électronique (EPB-ESC-ECU) étant prévue pour être mise en réseau avec des partenaires de communication tels que notamment des unités électroniques, des capteurs et/ou des systèmes de bus de données pour échanger des signaux et/ou des données avec les partenaires de communication, et comprenant une routine électronique destinée à l'approvisionnement logiciel, la configuration et/ou l'étalonnage du système de freinage de véhicule automobile (1) et, présentant des propriétés d'auto-apprentissage, faisant suite à la production d'un véhicule, au sens d'une routine de configuration automatisée, **caractérisé en ce que** la routine d'approvisionnement logiciel, de configuration et/ou d'étalonnage du système de freinage de véhicule automobile électro-hydraulique (1) est conçue avec plusieurs étages, et **en ce que** des paramètres et/ou données caractéristiques du système de freinage de véhicule automobile (1) sont répartis selon une pondération en différentes catégories, et **en ce que** des paramètres et/ou données caractéristiques, sélectionnés selon la pondération, du système de freinage de véhicule automobile (1) sont accessibles à la routine de configuration automatisée, des paramètres et/ou données caractéristiques critiques en termes de sécurité, déterminés en fonction de la pondération, du système de freinage de véhicule automobile (1) étant accessibles à une routine de configuration distincte.

2. Procédé de fonctionnement d'un véhicule automobile selon la revendication 1, **caractérisé en ce que** la routine de configuration automatisée est prévue pour un système de frein de stationnement et est prévue à la suite d'une routine de fin de ligne dans le fonctionnement en cours du véhicule automobile.

3. Procédé de fonctionnement selon la revendication 1, **caractérisé en ce que** la routine de configuration automatisée est protégée.

4. Procédé de fonctionnement selon la revendication 1, **caractérisé en ce que** les données caractéristiques et/ou les paramètres, qui sont lus avec le programme de configuration automatisé, concernent en particulier des informations relatives à un coefficient de frottement µ, en particulier un coefficient de frottement de roulement.

5. Procédé de fonctionnement selon la revendication 4, **caractérisé en ce que** les données caractéristiques et/ou les paramètres contiennent des informations relatives à un coefficient de frottement statique en fonction des conditions de frottement actuelles dans la chaîne cinématique du véhicule.

6. Procédé de fonctionnement selon la revendication 1, **caractérisé en ce que** les données caractéristiques et/ou les paramètres contiennent des informations relatives à la masse totale actuelle du véhicule.

7. Procédé de fonctionnement selon la revendication 1, **caractérisé en ce que** la routine de configuration automatisée du système de freinage de véhicule automobile (1) est effectuée selon le besoin et/ou de façon limitée et/ou temporaire et/ou périodique et/ou sur prescription en fonction d'une activation particulière.

8. Procédé de fonctionnement selon la revendication 7, **caractérisé en ce que** la routine de configuration automatisée est effectuée selon une identification électronique par référence à une unité électronique et/ou un logiciel et/ou un code séparés ou un moyen similaire.

9. Procédé de fonctionnement selon la revendication 7, **caractérisé en ce que** la routine de configuration automatisée est effectuée immédiatement avant un processus de démarrage ultérieur.

10. Procédé de fonctionnement selon l'une au moins des revendications précédentes, **caractérisé en ce que** les données obtenues par la routine de configuration automatisée sont vérifiées notamment par communication de l'unité de commande (EPB-ESC-ECU) avec d'autres partenaires de communication.

11. Procédé de fonctionnement selon l'une au moins des revendications précédentes, **caractérisé en ce que** des données en mémoire (données existantes) d'une configuration déjà effectuée sont remplacées par les données (nouvelles données) d'une routine de configuration automatisée seulement après confirmation positive et/ou activation.
